# EUROPÄISCHE PATENTSCHRIFT

(11) **EP 1 286 829 B1**
(45) Veröffentlichungstag und Bekanntmachung des Hinweises auf die Patenterteilung: **12.05.2004**
(21) Anmeldenummer: 01951507.1
(22) Anmeldetag: 17.05.2001
(51) Int. Cl.: B32B 15/08

(54) **VERFAHREN ZUR HERSTELLUNG EINES BAUTEILS**
METHOD FOR PRODUCING A COMPONENT
PROCEDE DE FABRICATION D'UN COMPOSANT

(30) Priorität: 20.05.2000 DE 10025119
(43) Veröffentlichungstag der Anmeldung: 05.03.2003
(73) Patentinhaber: Bayerische Motoren Werke Aktiengesellschaft, 80809 München (DE)
(72) Erfinder: ALDERSLEY, Nicholas, 85221 Dachau (DE)
(74) Vertreter: Schernhammer, Herbert
(86) Internationale Anmeldenummer: PCT/EP2001/005653
(87) Internationale Veröffentlichungsnummer: WO 2001/089828

(56) Entgegenhaltungen:
- US-A- 4 305 981
- US-A- 4 857 401

## Beschreibung

Die Erfindung betrifft ein Verfahren zur Herstellung eines Bauteils, insbesondere für ein Fahrzeug.

Ein bekanntes Herstellverfahren für Bauteile aus duroplastischen Kunststoffen ist das SMC-Verfahren, mit SMC als Abkürzung für Sheet Moulding Compound. Danach hergestellte Bauteile weisen einen niedrigen thermischen Ausdehnungskoeffizienten auf. Das duroplastische Ausgangsmaterial ist jedoch vergleichsweise teuer. Außerdem sind die Formgebungsmöglichkeiten eingeschränkt. Ein weiterer Nachteil liegt in den eingeschränkten Recyclingmöglichkeiten von duroplastischen Kunststoffen.

Bauteile aus thermoplastischem Kunststoff sind demgegenüber wegen der geringeren Halbzeugkosten kostengünstiger in der Herstellung. Außerdem zeichnen sie sich durch einfache Verarbeitbarkeit aus, mit vielfältigen Möglichkeiten in der Formgebung der Bauteile. Von Nachteil ist jedoch die vergleichsweise große Wärmeausdehnung thermoplastischer Bauteile. Bei Fahrzeugen mit Außenhautbauteilen aus thermoplastischem Kunststoff entstehen daher abhängig von der Temperatur unterschiedliche Spaltmaße zu benachbarten Außenhautbauteilen.

Aufgabe der Erfindung ist es, ein Verfahren bereitzustellen, mit dem die Herstellung eines Bauteils aus einem thermoplastischen Kunststoff ermöglicht wird, das einen reduzierten thermischen Ausdehnungskoeffizienten aufweist, um die Einsatzmöglichkeiten derartiger Bauteile zu erweitern.

Diese Aufgabe wird durch die in Anspruch 1 angegebenen Verfahrensschritte gelöst. Die Merkmale des Anspruchs 13 beschreiben ein erfindungsgemäßes Bauteil.

Durch die Beschichtung des aus einem thermoplastischen Werkstoff hergestellten Bauteils mit einem Überzug mit einem niedrigeren Wärmeausdehnungskoeffizienten wird die Wärmeausdehnung des gesamten Bauteils signifikant behindert. Bei Beschichtung mit einem metallischen Werkstoff beispielsweise wird eine Reduzierung der Wärmeausdehnung des gesamten Bauteils auf annähernd die Wärmedehnung des metallischen Überzugs erreicht. Erfindungsgemäß entsteht ein "Sandwichverbund" aus dem kostengünstigen thermoplastischen Grundmaterial, der ausdehnungshindernden Beschichtung und gegebenenfalls der dekorativen Oberflächenschicht auf zumindest der sichtbaren Außenfläche des Bauteils. Dieses Verbundbauteil kann vielseitig eingesetzt werden, unter anderem auch gezielt als Ersatz für bislang eingesetzte Bauteile aus duroplastischem Kunststoff. Neben den bei der Verarbeitung von thermoplastischen Werkstoffen gegebenen vielfältigen Formgebungsmöglichkeiten sind die erfindungsgemäß hergestellten Bauteile kostengünstiger und zeichnen sich durch geringeres Gewicht aus.

Das erfindungsgemäße Verfahren unterscheidet sich grundlegend von der bekannten Beschichtung von Bauteilen zur Erzielung einer dekorativen Oberfläche, wie beispielsweise aus der US-A-4,857,401 oder der US-A-4,305,981 bekannt. Das bedeutendste dieser bekannten Verfahren ist der Auftrag einer Chromschicht, um dem Bauteil ein spiegelnd glänzendes Aussehen zu verleihen. Im Fahrzeugbau werden beispielsweise Zierleisten, Kühlergrills etc. aus ästhetischen Gesichtspunkten verchromt. Demgegenüber dient die erfindungsgemäße Beschichtung thermoplastischer Bauteile ausschließlich der Behinderung der Wärmeausdehnung. Während die konventionelle Verchromung bereits die endgültige Sichtfläche des Bauteils darstellt, ist die ausdehnungshemmende Beschichtung des Bauteils gemäß der Erfindung rein funktional und kann dementsprechend auch auf einer nicht sichtbaren Fläche des Bauteils erfolgen. Befindet sich die ausdehnungshemmende Beschichtung im Bereich einer Sichtfläche des Bauteils, so wird sie anschließend noch mit einer dekorativen Oberflächenschicht überdeckt (siehe Anspruch 10).

Im Fahrzeugbau ermöglicht der Einsatz erfindungsgemäß hergestellter Außenhautbauteile mit reduzierter Wärmeausdehnung die Einhaltung gleichbleibend kleiner Fugenmaße zwischen benachbarten Außenhautbauteilen. So läßt sich beispielsweise im Front- oder Heckbereich eines Kraftfahrzeuges ein gleichmäßiges Fugenbild zwischen den Seitenteilen (aus einem metallischen Werkstoff) und den Stoßfängermodulen (aus einem thermoplastischen Kunststoff) erreichen.

Selbstverständlich können neben Außenhautbauteilen auch Bauteile für den Fahrzeuginnenraum nach dem erfindungsgemäßen Verfahren hergestellt werden. Bei großflächigen Bauteilen kommen die Vorteile erfindungsgemäß hergestellter Bauteile in besonderem Maße zum Tragen.

Neben Bauteilen für Fahrzeuge kann das erfindungsgemäße Verfahren auch auf anderen Gebieten eingesetzt werden, beispielsweise für Bauteile zur Verkleidung der Fassade von Gebäuden.

Die Beschichtung erfolgt generell mit einem Werkstoff, der eine geringere Wärmeausdehnung aufweist als das thermoplastische Grundmaterial des Bauteils. In besondere Weise eignen sich hierfür metallische Werkstoffe, da sie eine hohe Zug- und Druckfestigkeit aufweisen und somit auch bei nur geringer Schichtstärke die Wärmeausdehnung des thermoplastischen Kunststoffes wirkungsvoll behindern können. Der Auftrag des metallischen Werkstoffes erfolgt bevorzugt auf galvanischem Wege, wobei zunächst durch eine dünne metallische Beschichtung die Oberfläche des nichtleitenden thermoplastischen Kunststoffes leitend gemacht wird. Auf nähere Einzelheiten des an sich bekannten galvanischen Verfahrens wird hier nicht näher eingegangen.

Selbstverständlich kann die metallische Schicht auch durch jedes andere geeignete Verfahren aufgebracht werden. Beispielhaft sei hier das Aufkleben einer metallischen Folie genannt. Grundsätzlich ist auch das Bedampfen des thermoplastischen Kunststoffes mit einer ausreichenden Schichtstärke denkbar.

Bevorzugte metallische Materialien zum Überziehen des thermoplastischen Kunststoffs sind Kupfer, Nickel und Chrom. Die Schichtstärke des metallischen Werkstoffes beträgt bei galvanischem Auftrag beispielsweise bis ca. 0,03 mm, bei Aufkleben einer metallischen Folie beispielsweise bis ca. 0,1 mm.

Neben metallischen Werkstoffen können zur Beschichtung des thermoplastischen Kunststoffs auch nichtmetallische Werkstoffe, wie beispielsweise Kunstfasern, verwendet werden. Nichtmetallische Werkstoffe werden z. B. als Folien auf den thermoplastischen Kunststoff aufgeklebt. Die Schichtstärke ist materialabhängig und kann beispielsweise bei Kunstfasern ca. 1 mm betragen.

Die ausdehnungshemmende Beschichtung kann des Bauteils kann allseitig erfolgen oder auch gezielt nur an einem Teil der Oberfläche, z. B. nur auf der Außenseite des Bauteils, die in der Regel die Sichtseite ist. Bei Beschichtung des Bauteils auf einer Sichtseite erfolgt anschließend der Auftrag der eigentlichen dekorativen Oberflächenschicht. Bei einer ausdehnungshemmenden Beschichtung des Bauteils auf einer nicht sichtbaren Fläche kann der Auftrag der dekorativen Oberflächenschicht entfallen, wenn das thermoplastische Kunststoffmaterial als solches die Sichtfläche bilden soll.

Die dekorative Oberflächenschicht wird beispielsweise durch ein Lackierverfahren aufgebracht. Selbstverständlich sind auch andere Verfahren denkbar, beispielsweise Pulverbeschichtung oder die Anbringung einer Klebefolie. Im Fahrzeugbau erfolgt der Auftrag der Oberflächenschicht bevorzugt durch ein Lackierverfahren, entsprechend dem Lackiervorgang des übrigen Fahrzeugs, um eine einheitliche Oberfläche aller Bauteile des Fahrzeugs zu erreichen. Die Oberflächenschicht kann vor oder nach der Montage des Bauteils am Fahrzeug aufgetragen werden.

## Patentansprüche

1. Verfahren zur Herstellung eines Bauteils, insbesondere für ein Fahrzeug,
**gekennzeichnet durch** folgende Schritte:
a) Herstellung des Bauteils aus einem thermoplastischen Kunststoff
b) Beschichtung des Bauteils mit einem Werkstoff geringer Schichtstärke, der eine geringere Wärmeausdehnung aufweist als der thermoplastische Kunststoff, derart, dass die Beschichtung die Wärmedehnung des Bauteils signifikant behindert.

2. Verfahren nach Anspruch 1,
**dadurch gekennzeichnet, dass** der Werkstoff aufgrund seiner Druck- und Zugfestigkeit auch bei nur geringer Schichtstärke die Wärmedehnung des Bauteils signifikant behindert.

3. Verfahren nach Anspruch 1 oder 2,
**dadurch gekennzeichnet, dass** die Beschichtung mit einem metallischen Werkstoff erfolgt.

4. Verfahren nach Anspruch 3,
**dadurch gekennzeichnet, dass** die Beschichtung durch ein galvanisches Verfahren erfolgt.

5. Verfahren nach Anspruch 4,
**dadurch gekennzeichnet, dass** die Schichtstärke des metallischen Werkstoffs bis 0,03 mm beträgt.

6. Verfahren nach Anspruch 1 oder 2,
**dadurch gekennzeichnet, dass** die Beschichtung mit einem nichtmetallischen Werkstoff erfolgt.

7. Verfahren nach Anspruch 6,
**dadurch gekennzeichnet, dass** die Beschichtung mit Kunstfasern erfolgt, bei einer Schichtstärke bis 1 mm.

8. Verfahren nach einem der vorgenannten Ansprüche,
**dadurch gekennzeichnet, dass** die Beschichtung durch Aufkleben des folienartig bereitgestellten Werkstoffes erfolgt.

9. Verfahren nach Anspruch 8,
**dadurch gekennzeichnet, dass** eine metallische Folie mit einer Schichtstärke bis 0,1 mm verwendet wird.

10. Verfahren nach einem der Ansprüche 1 bis 9,
**dadurch gekennzeichnet, dass** im Anschluss an den Schritt b) eine dekorative Oberflächenschicht auf den Werkstoff geringerer Wärmedehnung aufgetragen wird.

11. Verfahren nach Anspruch 10,
**dadurch gekennzeichnet, dass** der Auftrag der dekorativen Oberflächenschicht durch ein Lackierverfahren erfolgt.

12. Verfahren nach Anspruch 11,
**dadurch gekennzeichnet, dass** das Lackierverfahren entsprechend dem Lackiervorgang des übrigen Fahrzeugs erfolgt, um eine einheitliche Oberfläche zu erreichen.

13. Bauteil, hergestellt nach einem der Ansprüche 1 bis 12,
**dadurch gekennzeichnet, dass** das Bauteil ein Außenhautbauteil eines Kraftfahrzeugs ist.

## Claims

1. A method of producing a component, especially for a vehicle, and
**characterised by** the following steps:
a) production of the component from a thermoplastics material and
b) coating the component with a thin layer of a material having lower thermal expansion than the thermoplastics material, such that the coating significantly restricts the thermal expansion of the component.

2. A method according to claim 1, **characterised in that** even in a thin layer, the material, owing to its resistance to pressure and tension, significantly restricts the thermal expansion of the component.

3. A method according to claim 1 or 2, **characterised in that** the coating is of metal material.

4. A method according to claim 3, **characterised in that** the coating is electrodeposited.

5. A method according to claim 4, **characterised in that** the layer thickness of the metal material is up to 0.03 mm.

6. A method according to claim 1 or 2, **characterised in that** the coating is of a non-metallic material.

7. A method according to claim 6, **characterised in that** the coating is of plastics material fibres in a layer up to 1 mm thick.

8. A method according to any of the preceding claims, **characterised in that** the coating is made by sticking the material, which is available in sheets.

9. A method according to claim 8, **characterised by** use of a metal foil having a layer thickness of up to 0.1 mm.

10. A method according to any of claims 1 to 9, **characterised in that** after step b) a decorative surface layer is applied to the material having lower thermal expansion.

11. A method according to claim 10, **characterised in that** the decorative surface layer is applied by lacquering.

12. A method according to claim 11, **characterised in that** the lacquering process is similar to that for the rest of the vehicle, to obtain a uniform surface.

13. A component made according to any of claims 1 to 12, **characterised in that** it is a component of the shell of a vehicle body.

## Revendications

1. Procédé pour fabriquer un composant, en particulier pour un véhicule,
**caractérisé par**
les étapes suivantes :
a) le composant est fabriqué en une matière synthétique thermoplastique,
b) le composant est revêtu d'un matériau dont l'épaisseur de couche est faible et qui présente une dilatation thermique plus faible que la matière synthétique thermoplastique, de sorte que le revêtement entrave significativement la dilatation thermique du composant.

2. Procédé selon la revendication 1,
**caractérisé en ce que**
du fait de sa résistance à la traction et à la pression, le matériau entrave significativement la dilatation thermique du composant, même lorsque l'épaisseur de la couche est faible.

3. Procédé selon la revendication 1 ou 2,
**caractérisé en ce que**
le revêtement est réalisé à l'aide d'un matériau métallique.

4. Procédé selon la revendication 3,
**caractérisé en ce que**
le revêtement est réalisé par un procédé galvanique.

5. Procédé selon la revendication 4,
**caractérisé en ce que**
l'épaisseur de couche du matériau métallique peut atteindre 0,03 mm.

6. Procédé selon la revendication 1 ou 2,
**caractérisé en ce que**
le revêtement est réalisé à l'aide d'un matériau non métallique.

7. Procédé selon la revendication 6,
**caractérisé en ce que**
le revêtement est réalisé à l'aide de fibres synthétiques sur une épaisseur de couche qui peut atteindre 1 mm.

8. Procédé selon l'une des revendications précédentes,
**caractérisé en ce que**
le revêtement est réalisé en collant le matériau préparé sous forme de feuille.

9. Procédé selon la revendication 8,
**caractérisé en ce que**
l'on utilise une feuille métallique dont l'épaisseur de couche peut atteindre 0,1 mm.

10. Procédé selon l'une des revendications 1 à 9,
**caractérisé en ce qu'**
après l'étape b) on applique une couche superficielle décorative sur le matériau dont la dilatation thermique est faible.

11. Procédé selon la revendication 10,
**caractérisé en ce que**
l'application de la couche superficielle décorative est réalisée par un procédé de laquage.

12. Procédé selon la revendication 11,
**caractérisé en ce que**
le procédé de laquage est réalisé de façon qui correspond à l'opération de laquage du reste du véhicule afin d'obtenir une surface homogène.

13. Composant fabriqué selon l'une des revendications 1 à 12,
**caractérisé en ce que**
le composant est un composant externe d'un véhicule automobile.
